# EUROPÄISCHE PATENTSCHRIFT

(11) **EP 1 625 175 B1**
(45) Veröffentlichungstag und Bekanntmachung des Hinweises auf die Patenterteilung: **16.08.2006**
(21) Anmeldenummer: 04732602.0
(22) Anmeldetag: 13.05.2004
(51) Int. Cl.: C08J 9/14, C08G 18/10, C08G 18/71

(54) **SCHÄUMBARE MISCHUNGEN**
FOAMING MIXTURES
MELANGES MOUSSANTS

(30) Priorität: 22.05.2003 DE 10323206
(43) Veröffentlichungstag der Anmeldung: 15.02.2006
(73) Patentinhaber: Consortium für elektrochemische Industrie GmbH, 81379 München (DE)
(72) Erfinder: STANJEK, Volker, 81477 München (DE); LOTTNER, Willibald, 84489 Weilheim (DE); WEIDNER, Richard, 84489 Burghausen (DE); KNEZEVIC, Christine, 81369 München (DE); SCHAUER, Felicitas, 85653 Aying (DE)
(74) Vertreter: Fritz, Helmut
(86) Internationale Anmeldenummer: PCT/EP2004/005156
(87) Internationale Veröffentlichungsnummer: WO 2004/104078

(56) Entgegenhaltungen:
- WO-A-02/066532
- US-A- 3 895 043

## Beschreibung

Die Erfindung betrifft schäumbare Mischungen und Druckbehälter, enthaltend die schäumbaren Mischungen.

Spraybare Montageschäume dienen zum Ausfüllen von Hohlräumen vor allem im Baubereich. Hier werden sie u.a. zum Abdichten von Fugen, z.B. bei Fenstern und Türen eingesetzt, wobei sie als ausgezeichnet isolierende Materialien zu einer guten Wärmedämmung führen. Weitere Anwendungen sind beispielsweise die Isolierung von Rohrleitungen oder das Ausschäumen von Hohlräumen in technischen Geräten.

Bei sämtlichen herkömmlichen Montageschäumen handelt es sich um sogenannte Polyurethanschäume (PU-Schäume), die im unvernetzten Zustand aus Prepolymeren bestehen, welche über eine hohe Konzentration an freien Isocyanatgruppen verfügen. Diese Isocyanatgruppen sind in der Lage, mit geeigneten Reaktionspartnern bereits bei Raumtemperatur Additionsreaktionen einzugehen, wodurch eine Aushärtung des Sprayschaumes nach dem Auftrag erreicht wird. Die Schaumstruktur wird dabei durch das Einmengen eines leichtflüchtigen Treibmittels in das noch unvernetzte Rohmaterial und/oder durch Kohlendioxid erzeugt, wobei letzteres durch eine Reaktion von Isocyanaten mit Wasser gebildet wird. Das Ausbringen des Schaumes geschieht in der Regel aus Druckdosen durch den Eigendruck des Treibmittels.

Als Reaktionspartner für die Isocyanate dienen Alkohole mit zwei oder mehr OH-Gruppen - vor allem verzweigte und unverzweigte Polyole - oder aber Wasser. Letzteres reagiert mit Isocyanaten unter der bereits erwähnten Freisetzung von Kohlendioxid zu primären Aminen, die sich dann direkt an eine weitere, noch unverbrauchte Isocyanatgruppe addieren können. Es entstehen Urethan- bzw. Harnstoffeinheiten, die auf Grund ihrer hohen Polarität und ihrer Fähigkeit zur Ausbildung von Wasserstoffbrückenbindungen im ausgehärteten Material teilkristalline Substrukturen ausbilden können und so zu Schäumen mit hoher Härte, Druck- und Reißfestigkeit führen.

Als Treibmittel werden meist Gase verwendet, die bereits bei relativ geringem Druck kondensierbar sind und somit der Prepolymermischung in flüssigem Zustand beigemischt werden können, ohne daß die Spraydosen übermäßig hohen Drücken ausgesetzt werden müssen. Des weiteren können die Prepolymerabmischungen weitere Additive enthalten, wie z.B. Schaumstabilisatoren, Emulgatoren, Flammschutzmittel, Weichmacher und Katalysatoren. Bei den letzteren handelt es sich meist um organische Zinn(IV)-Verbindungen oder tertiäre Amine. Geeignet sind aber beispielsweise auch Eisen(III)-Komplexe.

PU-Sprayschäume werden sowohl als sogenannte einkomponentige (1K-) als auch als zweikomponentige (2K-) Schäume hergestellt. Die 1K-Schäume härten dabei ausschließlich durch den Kontakt der isocyanathaltigen Prepolymermischung mit der Luftfeuchtigkeit aus. Durch das bei den 1K-Schäumen während der Härtungsreaktion freigesetzte Kohlendioxid kann zudem die Schaumbildung unterstützt werden. 2K-Schäume enthalten eine Isocyanat- und eine Polyol-Komponente, die direkt vor dem Verschäumen gut miteinander vermischt werden müssen und durch die Reaktion des Polyols mit den Isocyanaten aushärten. Vorteil der 2K-Systeme ist eine extrem kurze Aushärtdauer von z.T. nur wenigen Minuten bis zu einer vollständigen Härtung. Sie besitzen jedoch den Nachteil, daß sie eine kompliziertere Druckdose mit zwei Kammern benötigen und zudem in der Handhabung deutlich weniger komfortabel sind als die 1K-Systeme.

Die ausgehärteten PU-Schäume zeichnen sich vor allem durch ihre ausgezeichneten mechanischen und wärmedämmenden Eigenschaften aus. Des weiteren besitzen sie eine sehr gute Haftung auf den meisten Untergründen und sind unter trockenen und UVgeschützten Bedingungen von nahezu beliebiger Beständigkeit. Weitere Vorteile liegen in der toxikologischen Unbedenklichkeit der ausgehärteten Schäume ab dem Zeitpunkt, an dem sämtliche Isocyanateinheiten quantitativ abreagiert sind, sowie in ihrer zügigen Aushärtung und ihrer leichten Handhabbarkeit. Auf Grund dieser Eigenschaften haben sich PU-Schäume in der Praxis sehr bewährt.

Allerdings besitzen die PU-Sprayschäume den kritischen Nachteil, daß die Isocyanatgruppen auf Grund ihrer hohen Reaktivität auch ausgesprochen reizende und toxische Wirkungen entfalten können. Auch stehen die Amine, die sich durch eine Reaktion von monomeren Diisocyanaten mit einem Überschuß an Wasser bilden können, in vielen Fällen im Verdacht, krebserregend zu sein. Derartige monomere Diisocyanate sind in den meisten Sprayschaumabmischungen neben den isocyanatterminierten Prepolymeren ebenfalls enthalten. Daher sind die unvernetzten Sprayschaummassen bis zur vollständigen Aushärtung toxikologisch nicht unbedenklich. Kritisch ist hier neben dem direkten Kontakt der Prepolymermischung mit der Haut vor allem auch eine mögliche Aerosolbildung während des Aufbringen des Schaumes oder das Verdampfen von niedermolekularen Bestandteilen, z.B. von monomeren Isocyanaten. Dadurch besteht die Gefahr, daß toxikologisch bedenkliche Verbindungen über die Atemluft aufgenommen werden. Zudem besitzen Isocyanate ein erhebliches allergenes Potential und können u.a. Asthmaanfälle auslösen. Verschärft werden diese Risiken noch durch die Tatsache, daß die PU-Sprayschäume oftmals nicht von geschulten und geübten Anwendern sondern von Bastlern und Heimwerkern verwendet werden, so daß eine sachgerechte Handhabung nicht immer vorausgesetzt werden kann.

Als Folge des von herkömmlichen PU-Schäumen ausgehenden Gefährdungspotentials und der damit verbundenen Kennzeichnungspflicht hat sich zusätzlich auch noch das Problem einer stark sinkenden Akzeptanz der entsprechenden Produkte beim Anwender ergeben. Zudem gelten ganz oder teilweise entleerte Spraydosen als Sondermüll und müssen entsprechend gekennzeichnet und in einigen Ländern wie z.B. Deutschland sogar mittels eines kostenintensiven Recyclingsystems einer Wiederverwertung zugänglich gemacht werden.

Um diese Nachteile zu überwinden, wurden u.a. in DE-A-43 03 848 bereits Prepolymere für Sprayschäume beschrieben, die keine bzw. nur geringe Konzentrationen an monomeren Isocyanaten enthalten. Nachteilig an solchen Systemen ist jedoch die Tatsache, daß die Prepolymere noch immer über Isocyanatgruppen verfügen, so daß derartige PU-Sprayschäume unter toxikologischen Gesichtspunkten zwar als günstiger als herkömmliche Schäume, nicht aber als unbedenklich zu bezeichnen sind. Auch werden die Akzeptanz- und Abfallprobleme durch derartige Schaumsysteme nicht gelöst.

Es wäre daher wünschenswert, wenn zur Herstellung von Sprayschäumen Prepolymere zur Verfügung stehen würden, die nicht über Isocyanatgruppen vernetzen und somit toxikologisch unbedenklich sind. Allerdings sollten sich auch mit diesen Prepolymermischungen Sprayschäume herstellen lassen, die im ausgehärteten Zustand ähnlich gute Eigenschaften und vor allem eine vergleichbare Härte aufweisen wie herkömmliche isocyanathaltige PU-Schäume. Außerdem müssen auch einkomponentige Sprayschaumsysteme möglich sein, die ausschließlich über den Kontakt mit der Luftfeuchtigkeit aushärten. Dabei sollten sie eine vergleichbar problemlose Handhabbarkeit und Verarbeitbarkeit inklusive einer hohen Härtungsgeschwindigkeit auch bei niedriger Katalysatorkonzentration aufweisen. Letzteres ist vor allem deshalb wichtig, da die in der Regel als Katalysatoren eingesetzten zinnorganischen Verbindungen toxikologisch ebenfalls bedenklich sind.

In der Literatur sind hier z.B. in US-A-6020389 kondensationsvernetzende Siliconschäume beschrieben, die alkoxy-, acyloxy- oder oximoterminierte Siliconprepolymere enthalten. Derartige schäumbare Mischungen sind zwar prinzipiell zur Herstellung von 1K-Schäumen geeignet, die bei Raumtemperatur nur durch die Luftfeuchtigkeit aushärten.

Allerdings lassen sich derartige Systeme aus rein siliconhaltigen Prepolymeren nur zur Erzeugung von elastischen weichen bis halbharten Schäumen einsetzen. Zur Herstellung von harten Montageschäumen sind sie nicht geeignet.

In EP-1098920-A, DE-10108038-A und DE-10108039-A werden Prepolymerabmischungen mit alkoxysilanterminierten Prepolymeren zur Herstellung von harten Sprayschäumen beschrieben. Dabei handelt es sich um Polymere mit einem organischen Rückgrat, das in der Regel eine herkömmliche Polyurethanstruktur besitzt. In EP-1098920-A und DE-10108038-A wird dieses organische Rückgrat durch eine Umsetzung von gängigen Diisocyanaten mit Polyolen gebildet. Dabei wird ein entsprechender Überschuß an Diisocyanaten eingesetzt, so daß isocyanatterminierte Prepolymere erhalten werden. Diese können dann in einem zweiten Reaktionsschritt mit 3-Aminopropyl-trimethoxysilanderivaten zu den gewünschten alkoxysilanterminierten Polyurethanprepolymeren umgesetzt werden. In DE-10108038-A wird den silanterminierten Prepolymeren noch ein spezieller Reaktivverdünner zugegeben. In DE-10108039-A wird ein zweites Verfahren zur Herstellung von alkoxysilanterminierten Prepolymere beschrieben, nach dem diese durch eine Reaktion aus hydroxyfunktionellen Polyolen mit 3-Isocyanatopropyl-trimethoxysilan gebildet werden.

Diese alkoxysilanterminierten Prepolymere sowie die gegebenenfalls vorhandenen Reaktivverdünner können unter Einwirkung eines geeigneten Katalysators in Gegenwart von Wasser unter Methanolabspaltung miteinander kondensieren und dadurch aushärten. Das Wasser kann dabei als solches zugesetzt werden oder auch aus einem Kontakt mit der Luftfeuchtigkeit stammen. Somit lassen sich mit einem solchen System sowohl 1K-als auch 2K-Schäume herstellen.

Die in EP-1098920-A, DE-10108038-A und DE-10108039-A beschriebenen alkoxysilanterminierten Polyurethanprepolymere besitzen jedoch u.a. den Nachteil einer relativ geringen Reaktivität gegenüber der Luftfeuchtigkeit. Deshalb sind hohe Konzentrationen eines Zinnkatalysators zur ausreichend schnellen Aushärtung erforderlich.

Eine deutliche Verbesserung stellt hier ein in WO 02/066532 beschriebenes System dar. Die hier beschriebenen alkoxysilanterminierten Prepolymere zur Herstellung von isocyanatfreien Sprayschäumen enthalten Silanterminierungen der allgemeinen Formel [1], 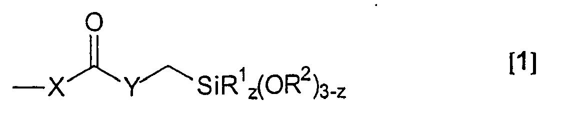 mit:
- X und Y: ein Sauerstoffatom, eine N-R'-Gruppe oder ein Schwefelatom,
- R¹: einen Alkyl-, Cycloalkyl-, Alkenyl- oder Arylrest mit 1-10 Kohlenstoffatomen,
- R²: einen Alkylrest mit 1-2 Kohlenstoffatomen oder einen ░-Oxaalkyl-alkylrest mit insgesamt 2-10 Kohlenstoffatomen,
- R': ein Wasserstoffatom, einen Alkyl-, Alkenyl- oder Arylrest mit 1-10 Kohlenstoffatomen oder eine -CH₂-SiR¹_{z}(OR²)_{3-z-}Gruppe und,
- z: die Werte 0 oder 1 bedeuten,
mit der Maßgabe, daß mindestens eine der beiden Gruppen X oder Y eine NH-Funktion darstellt.

Bei diesen alkoxysilanterminierten Prepolymeren sind die vernetzbaren Alkoxysilylgruppen nur durch einen Methylspacer von einer Urethan- oder Harnstoffeinheit getrennt. Diese Prepolymere sind gegenüber Wasser erstaunlich reaktiv und besitzen somit in Gegenwart von Luftfeuchtigkeit extrem kurze Klebfreizeiten und können sogar zinnfrei vernetzt werden.

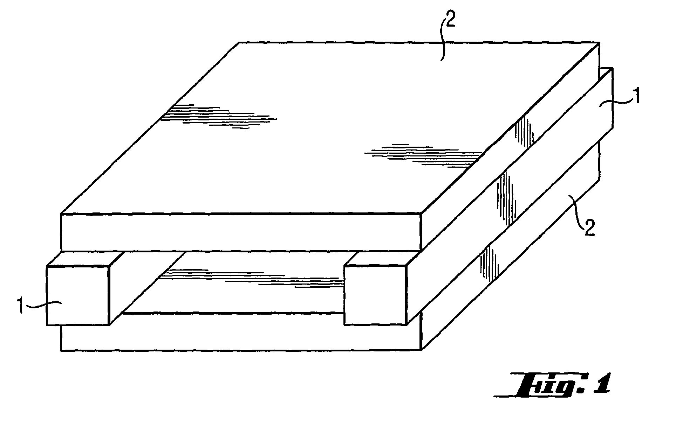

Ein weiterer entscheidender Nachteil von silanterminierten Prepolymeren für Sprayschaumanwendungen hingegen konnte in keinem der genannten Patentliteratur-Zitate gelöst werden. So zeigen sämtliche silanvernetzende Schäume des Standes der Technik unter bestimmten Bedingungen eine Rißbildung. Besonders ausgeprägt ist diese Rißbildung, wenn der Schaum in einer Modellfuge nach Fig. 1 verschäumt wird, deren Holzplatten zuvor angefeuchtet worden waren. Diese Rißbildung kann dabei durch die folgende Theorie erklärt werden, die im Rahmen der hier vorgestellten Arbeiten entwickelt wurde: Danach ist die Rißbildung auf die im Stand der Technik eingesetzten polaren Treibmittel zurückzuführen. Denn die Diffusion dieser polaren Treibmittel durch die Schaumlamellen, die ebenfalls aus polarem Material bestehen, verläuft wesentlich schneller als die in umgekehrter Richtung verlaufende Diffusion der unpolaren Luft. In der Folge kann es zum Schrumpfen und schließlich zum Reißen des - erst teilweise gehärteten und damit nicht hinreichend rißfesten - Schaumes kommen. Denn anders als bei herkömmlichen PU-Schäumen wird hier während der Härtung kein Kohlendioxid freigesetzt, welches den Treibmittelschwund kompensieren könnte, bis die Aushärtung des Schaumes abgeschlossen ist.

Zwar läßt sich die Rißbildung vermeiden, wenn als Treibmittel unpolare Treibgase, z.B. leichtflüchtige Kohlenwasserstoffe wie Propan/Butan-Mischungen, eingesetzt werden. Denn diese unpolaren Treibmittel diffundieren deutlich langsamer durch die Schaumlamellen aus dem Schaum heraus, so daß der Schaum keine Tendenz zum Schrumpfen und zur Rißbildung mehr zeigt. Nachteilig an dieser Maßnahme ist allerdings die Tatsache, daß unpolare Treibmittel wie Propan/Butan unverträglich mit silanterminierten Prepolymeren entsprechend des Standes der Technik sind. Zwar lassen sich auch mit Prepolymeren des Standes der Technik und Propan/Butan schäumbare Emulsionen herstellen, diese sind jedoch nicht lagerstabil und lassen sich nach einer Entmischung nicht mehr verschäumen. Eine Reemulgierung ist dabei auf Grund der hohen Viskosität der silanterminierten Prepolymere des Standes der Technik bei Raumtemperatur ebenfalls nicht möglich.

Daher sind weitere Maßnahmen erforderlich, um Lösungen aus silanterminierten Prepolymeren und Treibmitteln zu erhalten, die sich durch eine hinreichend niedrige Viskosität auszeichnen.

Eine Maßnahme zur Viskositätserniedrigung von Lösungen aus silanterminierten Treibmitteln und unpolaren Treibmitteln besteht in dem Einsatz von Treibmittelmischungen, die neben unpolaren Treibmitteln auch noch einen gewissen Anteil an polaren Treibmitteln enthalten, die eine deutlich bessere Löslichkeit im Prepolymer besitzen. Zu nennen wären hier beispielsweise Dimethylether oder fluorierte Treibmittel wie 1,1,1,2-Tetrafluorethan oder 1,1-Difluorethan. Allerdings ist auch die Wirksamkeit dieser Maßnahme beschränkt, da diese Treibmittel - wie bereits beschrieben - sehr schnell durch die Lamellen des (teil-)gehärteten Schaumes diffundieren können. Somit erhöhen diese Treibmittel in zu hohen Konzentrationen wiederum die Tendenz zum Schrumpfen des Schaumes und zur Rißbildung. Dementsprechend weisen Schäume mit einem zu hohen Gehalt an polaren Treibmitteln bei einer Verschäumung in der Modellfuge gemäß Fig. 1 Risse auf. Zudem sind sämtliche fluorhaltigen Treibgase ob ihrer Wirkung als Treibhausgase kritisch zu sehen und in einigen Ländern wie z.B. Dänemark für Sprayschaumanwendungen bereits verboten.

Aufgabe der vorliegenden Erfindung war es, Abmischungen auf Basis isocyanatfreier Prepolymere zu Verfügung zu stellen, die zur Herstellung von Sprayschäumen geeignet sind, welche bei einer Verschäumung rißfrei bleiben und gleichzeitig eine so niedrige Viskosität aufweisen, daß ihre Verschäumung einfach ist.

Gegenstand der Erfindung sind schäumbare Mischungen (M), enthaltend
(A) isocyanatfreie, alkoxysilanterminierte Prepolymere (A) welche über Silanterminierungen der allgemeinen Formel [2],

   -SiR³_{z}(OR⁴)_{3-z} [2]

   verfügen, in der
   - R³: einen Alkyl-, Cycloalkyl-, Alkenyl- oder Arylrest mit 1-10 Kohlenstoffatomen,
   - R⁴: einen Alkylrest mit 1-2 Kohlenstoffatomen oder einen ω-Oxaalkyl-alkylrest mit insgesamt 2-10 Kohlenstoffatomen und
   - z: die Werte 0 oder 1 bedeuten,
(B) Treibmittel und
(C) Lösungsmittel mit einem Siedepunkt von mindestens 30 °C.

Es wurde gefunden, daß sich die Viskosität von Mischungen aus silanterminierten Prepolymeren und Treibmitteln deutlich erniedrigen läßt, wenn dieser Mischung geringe Mengen an Lösungsmitteln mit einem Siedepunkt über 30 °C zugegeben wird, ohne daß die resultierenden Schäume bei einer Verschäumung in der gegebenenfalls vorher angefeuchteten Modellfuge nach Fig. 1 Risse aufweisen. Die Verschäumung der resultierenden Mischungen (M) ist ebenso einfach und unproblematisch wie diejenige von herkömmlichen Polyurethanschäumen.

Vorzugsweise sind die Mischungen (M) isocyanatfrei.

Bevorzugt sind dabei schäumbare Mischungen (M), enthaltend Prepolymere (A), die über Alkoxysilylgruppen der allgemeinen Formel [3] 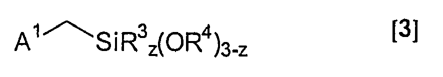 verfügen, wobei
- A¹: ein Sauerstoffatom, eine N-R⁵-Gruppe oder ein Schwefelatom,
- R⁵: ein Wasserstoffatom, einen Alkyl-, Cycloalkyl-, Alkenyl- oder Arylrest mit 1-10 Kohlenstoffatomen oder eine -CH₂₋SiR³_{z}(OR⁴)_{3-z}-Gruppe bedeuten, und
- R³, R⁴ und z: die bei der allgemeinen Formel [2] angegebenen Bedeutungen aufweisen.

Besonders bevorzugt sind dabei Alkoxysilylgruppen der allgemeinen Formel [3], bei denen das Heteroatom A¹ Teil einer Harnstoff- oder Urethaneinheit ist.

Als Reste R³ werden Methyl-, Ethyl- oder Phenylgruppen bevorzugt. Bei den Resten R⁴ handelt es sich bevorzugt um Methylgruppen und als Reste R⁵ werden Wasserstoff, Alkyl- und Alkenylreste mit 1-10 Kohlenstoffatomen, Aspartat-, Cyclohexyl- und Phenylreste bevorzugt.

Besonders bevorzugt sind schäumbare Mischungen (M), enthaltend Prepolymere (A), die über Alkoxysilylgruppen der allgemeinen Formel [4] verfügen 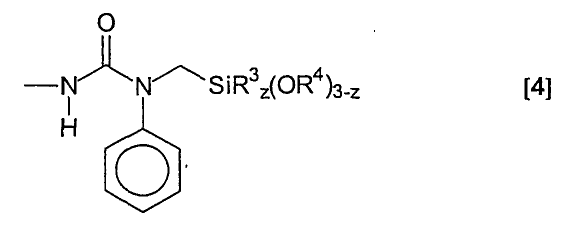 verfügen, wobei R³, R⁴ und z die bei der allgemeinen Formel [2] angegebenen Bedeutungen aufweisen.

In einer ebenfalls bevorzugten Ausführung der Erfindung werden Prepolymer (A) eingesetzt, mit Kettentermini, die zu 50-99 % aus Alkoxysilylgruppen der Formeln 2-4 und zu 1-50 % aus Gruppen der allgemeinen Formel [5] bestehen,

A² -R⁶ [5]

in der
- A²: ein Sauerstoffatom, eine N-R⁷-Gruppe oder ein Schwefelatom,
- R⁶: einen Alkyl-, Cycloalkyl-, Alkenyl-, Aryl- oder Arylalkylrest mit 2-50 Kohlenstoffatomen, wobei die Kohlenstoffkette beliebig durch nicht benachbarte Sauerstoffatome, Schwefelatome oder N-R²-Gruppen unterbrochen sein kann, und die Hauptkette von R⁶ auch noch durch laterale Alkylgruppen mit 1-10 Kohlenstoffatomen oder Halogenatome substituiert sein kann und
- R⁷ und R²: ein Wasserstoffatom, einen Alkyl-, Alkenyl- oder Arylrest mit 1-10 Kohlenstoffatomen bedeuten.

Bei dem Heteroatom A² handelt es sich bevorzugt um ein Sauerstoffatom. Besonders bevorzugt ist dieses Sauerstoffatom Teil einer Urethaneinheit.

Bevorzugt sind die Kettenenden der Prepolymere (A) zu 65-95 % mit Alkoxysilylgruppen und zu 5-35 % mit Gruppen der allgemeinen Formel [5] terminiert.

In einer weiteren bevorzugten Ausführungsform der Erfindung sind bei daß bei Herstellung der Prepolymere (A) halogenhaltige Polyole (A11) eingebaut worden. Diese Ausführungsform ist insbesondere für die Herstellung von silanvernetzenden Sprayschäumen mit verbessertem Brandverhalten geeignet.

Als Treibmittel (B) kommen prinzipiell sämtliche für Sprayschaumanwendungen bekannten Treibgase sowie deren Mischungen in Betracht. Bevorzugt besteht das Treibmittel (B) jedoch zu mindestens 30 Vol.-%, besonders bevorzugt zu mindestens 50 Vol.-% aus Kohlenwasserstoffen. Diese in dem Treibmittel (B) verwendeten Kohlenwasserstoffe besitzen bevorzugt 1-4 Kohlenstoffatome, besonders bevorzugt 3-4 Kohlenstoffatome. Als weitere typische Treibmittelkompenente werden der Treibgasmischung (B) bevorzugt 0,1-20 %, besonders bevorzugt 1-10 %, Dimethylether zugesetzt. Aber auch sämtliche weiteren bekannten Treibgase können den bevorzugten Treibmittelmischungen (B) als zusätzliche Komponenten zugesetzt werden. Hier können prinzipiell auch sämtliche fluorierten Treibmittel wie 1,1,1,2-Tetrafluoroethan, 1,1-Difluoroethan, 1,1,1,2,3,3,3-Heptafluoropropan verwendet werden.

Besonders bevorzugt sind Treibmittelmischungen(B), die ausschließlich aus Kohlenwasserstoffen - vorzugsweise Propan/Butan-Mischungen - und Dimethylether bestehen. Der Dimethylethergehalt liegt dabei bevorzugt bei 0-20 Vol.-%, besonders bevorzugt bei 1-15 Vol.-%.

Als Lösungsmittel (C) kommen prinzipiell sämtliche Lösungsmittel sowie Lösungsmittelmischungen mit einem Siedepunkt von mindestens 30°C in Betracht. Bevorzugt werden dabei Lösungsmittel (C) mit einem Siedepunkt von 40-200 °C, wobei Lösungsmittel mit einem Siedepunkt von 60-150 °C besonders bevorzugt werden. Selbstverständlich können auch Mischungen verschiedener Lösungsmittel eingesetzt werden.

Als Lösungsmittel (C) werden bevorzugt Verbindungen eingesetzt, die über ein Dipolmoment > 0 verfügen. Besonders bevorzugte Lösungsmittel verfügen über ein Heteroatom mit freien Elektronenpaaren, die Wasserstoffbrückenbindungen eingehen können. Besonders geeignete Lösungsmittel sind Alkohole, Ether und Ester, insbesondere Ether und Ester aus aliphatischen Carbonsäuren und aliphatischen Alkoholen und aliphatische Alkohole. Bevorzugt als Ether ist t-Butyl-methylether, bevorzugt als Ester sind Ethylacetat und Butylacetat, bevorzugt als Alkohole sind Methanol, Ethanol und Butanol. In einer besonders bevorzugten Ausführungsform werden als Lösungmittel (C) sekundäre oder tertiäre Alkohole wie z.B. t-Butanol eingesetzt.

Das Lösungsmittel (C) wird bevorzugt in Konzentrationen von 0,1-20 Vol.-% bezogen auf das Prepolymer (A) zugegeben.

Besonders bevorzugt wird es in Konzentrationen von 0,2-5 Vol.-% bezogen auf das Prepolymer (A) zugegeben.

Die Hauptketten der Prepolymere (A) können verzweigt oder unverzweigt sein. Die mittleren Kettenlängen können beliebig entsprechend der jeweils gewünschten Eigenschaften, wie Viskosität der unvernetzten Mischung (M) und Härte des fertigen Schaumes, angepaßt werden. Bei den Hauptketten kann es sich um Organopolysiloxane, z.B. Dimethylorganopolysiloxane, um Organosiloxan-Polyurethan-Copolymere oder auch um organische Ketten, z.B. Polyalkane, Polyether, Polyester, Polycarbonate, Polyurethane, Polyharnstoffe, Vinylacetatpolymere oder - copolymere handeln. Selbstverständlich können auch beliebige Mischungen oder Kombinationen aus Prepolymeren (A) mit verschiedenen Hauptketten eingesetzt werden. Dabei hat der Einsatz von Organopolysiloxanen oder Organosiloxan-Polyurethan-Copolymeren, gegebenenfalls in Kombination mit weiteren Prepolymeren mit organischen Hauptketten den Vorteil, daß die resultierenden Schäume über ein günstigeres Brandverhalten verfügen.

Bei einer besonders bevorzugten Ausführungsform der Erfindung besitzen die Prepolymere (A) einen Polyurethankern. Bei der Herstellung dieser Prepolymere (A) mit Polyurethankern wird vorzugsweise von den folgenden Edukten ausgegangen:
- Polyole (A1)
- Di- oder Polyisocyanate (A2)
- gegebenenfalls monomere Alkohole mit einer OH-Funktion (A3)
- Alkoxysilane (A4), die entweder über eine Isocyanatfunktion oder über eine isocyanatreaktive Gruppe verfügen.

Als Polyole (A1) für die Herstellung der Prepolymere (A) mit Polyurethankern können prinzipiell sämtliche polymeren, oligomeren oder auch monomeren Alkohole mit zwei oder mehr OH-Funktionen sowie deren Mischungen eingesetzt werden. Besonders geeignete Polyole (A1) sind aromatische und/oder aliphatische Polyesterpolyole und Polyetherpolyole, wie sie in der Literatur vielfach beschrieben sind. Die eingesetzten Polyether und/oder Polyester können dabei sowohl linear als auch verzweigt sein. Zudem können sie auch Substituenten wie z.B. Halogenatome besitzen. Auch hydroxyalkyl-funktionelle Phosphorsäureester/Polyphosphorsäureester können als Polyole (A1) eingesetzt werden. Ebenso ist der Einsatz beliebiger Mischungen der verschiedenen Polyoltypen möglich.

In einer bevorzugten Ausführung der Erfindung bestehen die Polyole (A1) dabei ganz oder teilweise aus halogenierten Polyolen (A11). Besonders geeignete Polyole (A11) sind halogensubstituierte aromatische oder aliphatische Polyester oder halogensubstituierte Polyetherpolyole. Dabei werden halogenierte Polyetherpolyole, die beispielsweise durch eine Umsetzung von chlorierten oder bromierten Di- oder Oligoolen mit Epichlorhydrin hergestellt werden können, bevorzugt. In einer besonders bevorzugten Ausführung der Erfindung wird als Komponente (A1) eine Mis.chung aus halogenierten Polyetherpolyolen und nicht halogenierten Polyetherpolyolen. eingesetzt.

Beispiele für gebräuchliche Diisocyanate (A2) sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate (A2) sind polymeres MDI (P-MDI), Triphenylmethantriisocanat oder Biuret-.triisocyanate. Die Di- und/oder Polyisocyanate (A2) können einzeln oder auch in Mischungen eingesetzt werden.

Die monomeren Alkohole mit einer Hydroxyfunktion (A3) dienen zum Einbau der Kettenenden entsprechend der allgemeinen Formel [5] in die Prepolymere (A). Hier können prinzipiell sämtliche Alkyl-, Cycloalkyl-, Alkenyl-, Aryl- oder Arylalkylmonoalkohole mit 2-50 Kohlenstoffatomen eingesetzt werden, wobei die Kohlenstoffketten der Alkohole beliebig durch nicht benachbarte Sauerstoffatome, Schwefelatome oder N-R⁷-Gruppen unterbrochen sein kann, und die Hauptkette von auch noch durch laterale Alkylgruppen mit 1-10 Kohlenstoffatomen oder Halogenatome substituiert sein kann. Bevorzugt werden jedoch Alkyl- oder Alkenyl-Alkohole mit 8-26 Kohlenstoffatomen, besonders bevorzugt Alkylalkohole mit 10-18 Kohlenstoffatomen eingesetzt. Die Kohlenstoffketten dieser Alkohole können dabei linear oder verzweigt sein, sind bevorzugt aber unverzweigt. Es können reine Alkohole oder auch Mischungen verschiedener Alkohole eingesetzt werden.

Als Alkoxysilane (A4) für die Herstellung der Prepolymere (A) mit Polyurethankern können prinzipiell sämtliche Alkoxysilane eingesetzt werden, die entweder über eine Isocyanatfunktion oder über eine isocyanatreaktive Gruppe verfügen. Die Alkoxysilane dienen zum Einbau der Alkoxysilylterminierungen in die Prepolymere (A). Als Alkoxysilane werden dabei vorzugsweise Verbindungen eingesetzt, werden ausgewählt werden aus Silanen der allgemeinen Formeln [6] und [7] 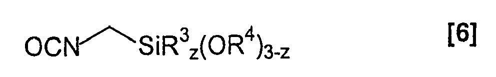 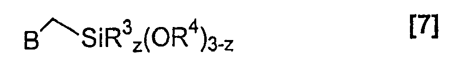 wobei
- B eine: OH-, SH- oder eine NHR⁵-Gruppe bedeutet und
- R³, R⁵ und z: die bei der allgemeinen Formel [3] angegebenen Bedeutungen aufweisen.

Dabei können einzelne Silane (A4) sowie auch Mischungen verschiedener Silane (A4) eingesetzt werden.

Besonders bevorzugt ist der Einsatz von Silanen (A4) der allgemeinen Formel [8], 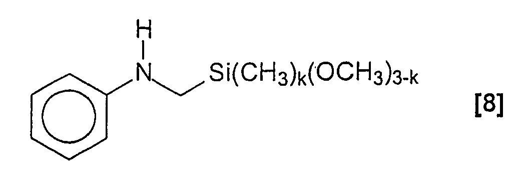 in der
- k: die Werte 0 oder 1 bedeutet.

Dieses Silan läßt sich durch eine Reaktion aus Chlormethyltrimethoxysilan oder Chlormethyldimethoxymethylsilan mit Anilin, d.h. aus sehr einfachen und preiswerten Edukten problemlos in nur einem Reaktionsschritt herstellen. Beim Einsatz dieses Silans werden Prepolymere (A) mit Alkoxysilylterminierungen der allgemeinen Formel [4] erhalten.

Die Herstellung der Prepolymere (A) erfolgt durch ein einfaches Zusammengeben der beschriebenen Komponenten, wobei gegebenenfalls noch ein Katalysator zugegeben und/oder bei erhöhter Temperatur gearbeitet werden kann. Dabei reagieren die Isocyanatgruppen der Di- und/oder Polyisocyanate sowie - falls vorhanden - die Isocyanatgruppen des Silans der allgemeinen Formel [6] mit den OH- bzw. NH-Funktionen der zugegebenen Polyole und der monomeren Alkohole sowie - falls vorhanden - mit den OH- bzw. NH-Funktionen der Silane der allgemeinen Formeln [7] und/oder [8]. Ob der relativ großen Exothermie diese Reaktionen ist es dabei meist vorteilhaft, die einzelnen Komponenten sukzessive zuzugeben, um die freiwerdende Wärmemenge besser kontrollieren zu können. Die Zugabereihenfolge und -geschwindigkeit der einzelnen Komponenten kann dabei beliebig gestaltet werden. Auch können die verschiedenen Rohstoffe sowohl einzeln als auch in Mischungen vorgelegt bzw. zugegeben werden. Prinzipiell ist auch eine kontinuierliche Prepolymerherstellung, z.B. in einem Röhrenreaktor, vorstellbar.

Die Konzentrationen aller an sämtlichen Reaktionsschritten beteiligter Isocyanatgruppen und aller isocyanatreaktiver Gruppen sowie die Reaktionsbedingungen sind dabei so gewählt, daß im Laufe der Prepolymersynthese sämtliche Isocyanatgruppen abreagieren. Das fertige Prepolymer (A) ist somit isocyanatfrei. In einer bevorzugten Ausführungsform der Erfindung sind die Konzentrationsverhältnisse des weiteren sowie die Reaktionsbedingungen so gewählt, daß nahezu sämtliche Kettenenden (> 90 % der Kettenenden, besonders bevorzugt > 95 % der Kettenenden) der Prepolymere (A) entweder mit Alkoxysilylgruppen oder aber mit Resten der allgemeinen Formel [5] terminiert sind.

Bei einem besonders bevorzugten Herstellungsverfahren wird die Isocyanat-Komponente (A2) bestehend aus einem oder auch aus mehreren verschiedenen Di/Polyisocyanaten vorgelegt und mit einem Polyol (A1) bzw. einer Mischung aus mehreren Polyolen (A1) im Unterschuß versetzt. Diese beiden Komponenten reagieren bei Temperaturen über 60-80 °C oder in Gegenwart eines Katalysators zu einem isocyanatterminierten Prepolymer. Dieses wird anschließend mit einem oder mehreren Aminosilanen der allgemeinen Formeln [7] und/oder [8] versetzt, wobei die Konzentrationen so gewählt sind, daß sämtliche Isocyanatgruppen abreagieren. Es resultiert ein silanterminiertes Prepolymer. Eine Reinigung oder sonstige Aufarbeitung ist nicht erforderlich.

Ebenfalls bevorzugt ist ein Verfahren zur Herstellung der schäumbaren Mischungen (M), bei dem die Prepolymersynthese vollständig oder zumindest teilweise in einem Druckbehälter, vorzugsweise in der Schaumdose durchgeführt wird. Dabei kann der Reaktionsmischung auch bereits das Treibmittel sowie sämtliche weiteren Additive zudosiert werden. Auf diese Art werden die - gegebenenfalls relativ hochviskosen - Prepolymere (A) in Gegenwart des Treibmittels erzeugt und es bildet sich direkt eine niederviskose Treibmittel-Prepolymer-Lösung bzw. - Mischung.

Die bei der Herstellung der Prepolymeren (A) auftretenden Reaktionen zwischen Isocyanatgruppen und isocyanatreaktiven Gruppen können gegebenenfalls durch einen Katalysator beschleunigt werden. Bevorzugt werden dabei dieselben Katalysatoren eingesetzt, die unten auch als Härtungskatalysatoren (E) für den Montageschaum aufgeführt sind. Gegebenenfalls kann derselbe Katalysator bzw. dieselbe Kombination mehrerer Katalysatoren, welche die Prepolymerherstellung katalysiert, auch als Härtungskatalysator (E) für die Schaumhärtung eingesetzt werden. In diesem Fall ist der Härtungskatalysator (E) bereits in dem fertigen-Prepolymer enthalten (A) und braucht bei der Compoundierung der schäumbaren Mischung (M) nicht mehr extra zugegeben werden.

Die schäumbaren Mischungen (M) können neben den Prepolymeren (A), den Treibmitteln (B) und den Lösungsmitteln (C) noch beliebige weitere (Pre-)Polymere enthalten. Diese können ebenfalls über reaktive Gruppen verfügen, über die sie bei der Schaumhärtung mit in das entstehende Netzwerk eingebaut werden. Sie können jedoch auch unreaktiv sein.

Neben den Prepolymeren (A) dem Treibmittel (B) sowie dem Lösungsmittel (C) können die Mischungen (M) auch noch einen niedermolekularen Reaktivverdünner (D) enthalten. Der Reaktivverdünner (D) wird den Mischungen (M) zugegeben, um so eine weitere Erniedrigung der Viskosität dieser Mischung zu erreichen. Dabei können, bezogen auf 100 Gewichtsteile Prepolymer (A), bis zu 100 Gewichtsteile, vorzugsweise 1 bis 40 Gewichtsteile eines niedermolekularen Reaktivverdünners (D) mit einer Viskosität von höchstens 5 Pas bei 20°C, der mindestens eine C₁- bis C₆-Alkoxysilylgruppe pro Molekül aufweist, in der Mischung (M) enthalten sein.

Als Reaktivverdünner (D) sind prinzipiell alle niedermolekularen Verbindungen mit einer Viskosität von vorzugsweise höchstens 5, insbesondere höchstens 2 Pas bei 20°C geeignet, die über reaktiven Alkoxysilylgruppen verfügen, über die sie während der Aushärtung des Schaumes mit in das entstehende dreidimensionale Netzwerk eingebaut werden können. Der Reaktivverdünner (D) dient vor allem zur Erniedrigung der Viskosität von gegebenenfalls relativ hochviskosen Prepolymermischungen. Er kann bereits während der Synthese der Prepolymere (A) zugegeben werden und so auch das Auftreten von gegebenenfalls hochviskosen und damit nur noch schwer zu handhabenden Zwischenprodukten verhindern. Vorzugsweise verfügt der Reaktivverdünner (D) über eine hinreichend hohe (Gewichts-) Dichte an vernetzbaren Alkoxysilylgruppen, so daß er während der Härtung in das entstehende Netzwerk eingebaut werden kann, ohne die Netzwerkdichte zu erniedrigen.

Bevorzugte Reaktivverdünner (D) sind die preisgünstigen Alkyltrimethoxysilane, wie Methyltrimethoxysilan sowie Vinyl- oder Phenyltrimethoxysilan, und deren Teilhydrolysate. Ein weiterer bevorzugter Reaktivverdünner ist das Carbamatosilan der allgemeinen Formel [9]: 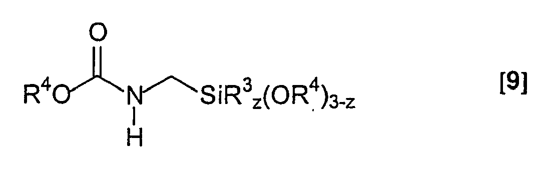 wobei R³, R⁴ und z die bei der allgemeinen Formel [3] angegebenen Bedeutungen aufweisen.

Zur Erzielung einer schnellen Aushärtung des Schaumes bei Raumtemperatur kann gegebenenfalls ein Härtungskatalysator (E) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage. Des weiteren können auch Titanate, z.B. Titan(IV)isopropylat, Eisen(III)-Verbindungen, z.B. Eisen(III)-äcetylacetonoat, oder auch Amine, z.B. Aminopropyltrimethoxysilan, N-(2-Aminoethyl)-aminopropyltrimethoxysilan, Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Auch Säuren wie Essigsäure, Trifluoressigsäure, Phosphorsäure oder Benzoesäure können eingesetzt werden. Daneben können aber auch zahlreiche weitere organische und anorganische Schwermetallverbindungen sowie organische und anorganische Lewissäuren oder -basen eingesetzt werden.

In einer bevorzugten Anwendung werden Katalysatoren (E) eingesetzt, mit denen sich Klebfreizeiten von < 3 min, besonders bevorzugt < 2 min erreichen lassen. Geeignete hochwirksame Katalysatoren (E) sind dabei vor allem starke Säuren wie Salzsäure, Toluensulfonsäure oder Benzoylchlorid sowie starke Basen wie z.B. 1,8-Diazabicyclo[5.4.0]undec-7-en, 1,5-Diazabicyclo[4.3.0]non-5-en. In einer anderen bevorzugten Ausführungsform werden Katalysatoren (E) eingesetzt, mit denen sich Klebfreizeiten zwischen 3 und 20 min, besonders bevorzugt zwischen 3 und 15 min, erreichen lassen. Für viele Anwendungen sind Klebfreizeiten in diesem mittleren Zeitfenster besonders günstig. Geeignete Katalysatoren (E) mit einer moderaten Reaktivität stellen beispielsweise partiell veresterte Phosphorsäurederivate wie z.B. Butylphosphat, Dibutylphosphat, Isopropylphosphat dar. Unter Klebfreizeit ist dabei diejenige Zeitspanne zu verstehen, die nach dem Ausbringen des Schaumes an die Luft vergeht, bis die Polymeroberfläche soweit gehärtet ist, daß nach einer Berührung dieser Oberfläche mit einem Laborspatel weder Polymermasse am Spatel haften bleibt, noch eine Fadenbildung auftritt (bei 23 °C, 50 % rh).

Zudem kann die Vernetzungsgeschwindigkeit auch durch die Kombination verschiedener Katalysatoren bzw. von Katalysatoren mit verschiedenen Cokatalysatoren weiter gesteigert bzw. genau auf den jeweiligen Bedarf hin abgestimmt werden.

Die Mischungen (M) können des weiteren die üblichen Zusätze, wie beispielsweise Schaumstabilisatoren und Zellregulantien, Flammschutzmittel, Thixotropiermittel und/oder Weichmacher enthalten. Als Schaumstabilisatoren können vor allem die handelsüblichen durch Polyetherseitenketten modifizierten Siliconoligomeren eingesetzt werden. Als Flammschutzmittel eignen sich u.a. die bekannten phosphorhaltigen Verbindungen, vor allem Phosphate und Phosphonate, halogenierte und halogenfreie Phosphorsäureester sowie auch halogenierte Polyester und Polyole oder Chlorparaffine.

Die Mischungen (M) können direkt als einkomponentige Sprayschäume eingesetzt werden. Die schäumbaren Mischungen (M) werden vorzugsweise in Druckbehältern, wie Druckdosen, aufbewahrt.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben, sind in den folgenden Beispielen alle Mengen- und Prozentangaben auf das Gewicht bezogen, alle Drücke 0,10 MPa (abs.) und alle Temperaturen 20°C.

Zur Erläuterung einiger Beispiele dient Fig. 1, in der die Modellfuge abgebildet ist, welche aus 2 Holzplatten (1) der Dimensionen 1x15x15 cm und 2 Kunststoffbalken (2) der Dimensionen 2x2x17 cm besteht.

### Beispiel 1:

### Herstellung von N-Phenylaminomethyl-methyldimethoxysilan:

2095 g (22,5 mol) Anilin werden in einem Laborreaktor komplett vorgelegt und anschließend mit Stickstoff inertisiert. Man heizt auf eine Temperatur von 115 °C auf und tropft 1159 g (7,5 mol) Chlormethyl-methyldimethoxysilan über 1.5 h zu und rührt für weitere 30 Minuten bei 125 - 130 °C nach. Nach einer Zugabe von ca. 600 g des Silans fällt vermehrt Anilinhydrochlorid als Salz aus, jedoch bleibt die Suspension bis zum Dosierende gut rührbar.

Das überschüssig eingesetzte Anilin wird bei gutem Vakuum (62 °C bei 7 mbar) entfernt. Anschließend gibt man bei Raumtemperatur 1400 ml n-Heptan zu und rührt die Suspension für 30 min bei 10 °C um Anilinhydrochlorid vollständig zu kristallisieren. Dieses wird anschließend abfiltriert. Das Lösungsmittel n-Heptan wird im Teilvakuum bei 60 - 70 °C entfernt. Der Rückstand wird destillativ gereinigt (89-91°C bei 0,16 mbar)

Es wird eine Ausbeute von 1210 g, d.h. 76,5% der Theorie, erreicht bei einer Produktreinheit von ca. 94,5 %. Das Produkt enthält etwa 3,5 % N,N-bis-[methyldimethoxysilyl-methyl]-phenylamin als Verunreinigung.

### Beispiel 2:

### Herstellung von Prepolymeren (A):

In einem 2 1 Reaktionsgefäß mit Rühr-, Kühl und Heizmöglichkeiten werden 232,2 g (1,333 mol) Toluen-2,4-diisocyanat (TDI) vorgelegt und auf ca. 50 °C erwärmt. Dann wird eine Mischung aus 264 g (0,621 mol) eines Polypropylenglycols mit einer mittleren Molmasse von 425 g/mol und 44 g (0,181 mmol) 1-Cetylalkohol und 0,5 g 2,2-Dimorpholinodiethylether zugegeben. Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt.

Anschließend kühlt man auf etwa 50 °C ab und gibt 44 ml Vinyltrimethoxysilan als Reaktivverdünner hinzu. Danach tropft man 273,2 g (1,292 mol) N-Phenylaminomethyl-methyldimethoxysilan (hergestellt nach Beispiel. 1) hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 8,2 Pas aufweist. Sie läßt sich problemlos gießen und weiterverarbeiten.

### Beispiel 3:

### Herstellung von Prepolymeren (A):

In einem 250 ml Reaktionsgefäß mit Rühr-, Kühl und Heizmöglichkeiten werden 26,6 g (153,0 mmol) Toluen-2,4-diisocyanat (TDI) vorgelegt und auf ca. 50 °C erwärmt. Dann wird eine Mischung aus 30 g.(70,6 mmol) eines Polypropylenglycols mit einer mittleren Molmasse von 425 g/mol und eine Mischung aus jeweils 1,67 g 1-Dodecanol (8,94 mmol), 1-Tetradecanol (7,77 mmol) und 1-Cetylalkohol (6,87 mmol)zugegeben. (Der Vorteil beim Einsatz einer derartigen Mischung verschiedener langkettiger Alkylalkohole liegt in der Schmelzpunkterniedrigung. Diese führt dazu, daß die Mischung aus Polypropylenglycol und den verschiedenen Alkoholen bis ca. 10 °C flüssig bleibt, ohne daß die Alkohole als Feststoff auskristallisieren. Ein derartiger Effekt kann vor allem bei einer Übertragung der Reaktion in einen technischen Maßstab von Vorteil sein.) Die Temperatur der Reaktionsmischung sollte dabei nicht auf über 80 °C ansteigen. Das Polypropylenglycol war zuvor durch 1-stündiges Erwärmen auf 100 C im Ölpumpenvakuum entwässert worden. Nach Beendigung der Zugabe wird für 15 min bei 80 °C gerührt.

Anschließend kühlt man auf etwa 50 °C ab und gibt 5 ml Vinyltrimethoxysilan als Reaktivverdünner hinzu. Danach tropft man 31,0 g (146,9 mmol) N-Phenylaminomethyl-methyldimethoxysilan (hergestellt nach Bsp. 1) hinzu und rührt anschließend für 60 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 8,7 Pas aufweist. Sie läßt sich problemlos gießen und weiterverarbeiten.

### Beispiel 4:

### Herstellung von Prepolymeren (A)

In einem 2 1 Reaktionsgefäß mit Rühr-, Kühl und Heizmöglichkeiten werden 400,0 g (2,297 mol) Toluen-2,4-diisocyanat (TDI) vorgelegt und auf ca. 80 °C erwärmt. Dann wird die Heizung entfernt und eine Mischung aus 322,14 g (1,378 mol) IXOL M 125® (bromiertes Polyol der Fa. Solvay) mit einer Äquivalentmasse von 233,75 g/mol, 146,4 g (0,345 mol) eines Polypropylenglycols mit einer mittleren Molmasse von 425 g/mol und 19,89 g (0,077 mol) eines Glycerinpropoxylates mit einer mittleren Molmasse von 260 g/mol so zugegeben, daß die Temperatur dabei nicht auf über 90°C steigt. Danach werden 80 ml Vinyltrimethoxysilan als Reaktivverdünner zugegeben. Nach Beendigung der Zugabe wird für 30 min bei 70-80 °C gerührt.

Anschließend tropft man 485,36 g (2,297 mol) N-Phenylaminomethyl-methyldimethoxysilan (hergestellt nach Bsp. 1) hinzu und rührt anschließend für 120 min bei 70 °C. In der resultierenden Prepolymermischung lassen sich IR-spektroskopisch keine Isocyanatgruppen mehr nachweisen. Man erhält eine klare, durchsichtige Prepolymermischung, die bei 50 °C eine Viskosität von 9,4 Pas aufweist. Sie läßt sich problemlos gießen und weiterverarbeiten.

### Beispiel 5:

### Herstellung einer schäumbaren Mischung (erfindungsgemäß)

50 g der Prepolymermischung aus Beispiel 2 werden in ein Druckglas mit Ventil gefüllt und mit 1,5 g Schaumstabilisator B8443® (Fa. Goldschmidt), 0,5 g Isopropylphosphat als Katalysator sowie 0,5 ml Ethylacetat versetzt. Anschließend wird diese Mischung mit 1 ml Dimethylether und 18 ml eines Propan-Butan-Gemisches (mit einem Propan/Butan-Verhältnis von 2:1) beaufschlagt. Von diesen 18 ml Propan/Butan sind ca, 10 ml im Prepolymer löslich. Diese Lösung bildet mit den verbleibenden 8 ml Propan/Butan ein 2-Phasengemisch. Aus diesem Gemisch lassen sich durch einfaches Schütteln Emulsionen erhalten, welche sich problemlos verschäumen lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, ca. 15-20 Hübe sind für eine hervorragende Emulgierung ausreichend.

### Beispiel 6:

### Herstellung einer schäumbaren Mischung (erfindungsgemäß):

50 g der Prepolymermischung aus Beispiel 3 werden in ein Druckglas mit Ventil gefüllt und mit 1,5 g Schaumstabilisator B8443® (Fa. Goldschmidt), 0,1 g Benzoylchlorid als Katalysator sowie 1,0 ml Ethylacetat versetzt. Anschließend wird diese Mischung mit 1 ml Dimethylether und 18 ml eines Propan-Butan-Gemisches (mit einem Propan/Butan-Verhältnis von 2:1) beaufschlagt. Von diesen 18 ml Propan/Butan sind ca. 10 ml im Prepolymer löslich. Diese Lösung bildet mit den verbleibenden 8 ml Propan/Butan ein 2-Phasengemisch. Aus diesem Gemisch lassen sich durch einfaches Schütteln Emulsionen erhalten, welche sich problemlos verschäumen.lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, ca. 15-20 Hübe sind für eine hervorragende Emulgierung ausreichend.

### Beispiel 7:

### Herstellung einer schäumbaren Mischung (erfindungsgemäß):

50 g der Prepolymermischung aus Beispiel 2 werden in ein Druckglas mit Ventil gefüllt und mit 1,5 g Schaumstabilisator B8443® (Fa. Goldschmidt), 0,5 g n-Butylphoshat als Katalysator sowie 0,5 g *t*-Butyl-methylether versetzt. Anschließend wird diese Mischung mit 1 ml Dimethylether und 18 ml eines Propan-Butan-Gemisches (mit einem Propan/Butan-Verhältnis von 2:1) beaufschlagt. Von diesen 18 ml Propan/Butan sind ca. 9,5 ml im Prepolymer löslich. Diese Lösung bildet mit den verbleibenden 8,5 ml Propan/Butan ein 2-Phasengemisch. Aus diesem Gemisch lassen sich durch einfaches Schütteln Emulsionen erhalten, welche sich problemlos verschäumen lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, ca. 15-20 Hübe sind für eine hervorragende Emulgierung ausreichend.

### Beispiel 8:

### Herstellung einer schäumbaren Mischung (erfindungsgemäß):

50 g der Prepolymermischung aus Beispiel 2 werden in ein Druckglas mit Ventil gefüllt und mit 1,5 g Schaumstabilisator B8443® (Fa. Goldschmidt), 0,1 ml konz. Salzsäure als Katalysator sowie 1,0 g n-Heptan versetzt. Anschließend wird diese Mischung mit 18 ml eines Propan-Butan-Gemisches (mit einem Propan/Butan-Verhältnis von 2:1) beaufschlagt. Von diesen 18 ml Propan/Butan sind ca. 9 ml im Prepolymer löslich. Diese Lösung bildet mit den verbleibenden 9 ml Propan/Butan ein 2-Phasengemisch. Aus diesem Gemisch lassen sich problemloses durch einfaches Schütteln Emulsionen erhalten, welche sich problemlos verschäumen lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, ca. 15-20 Hübe sind für eine hervorragende Emulgierung ausreichend.

### Beispiel 9:

### Herstellung einer schäumbaren Mischung (erfindungsgemäß):

50 g der Prepolymermischung aus Beispiel 4 werden in ein Druckglas mit Ventil gefüllt und mit 1,2 g Schaumstabilisator B8443® (Fa. Goldschmidt), 0,3 ml Butylphosphat als Katalysator und 1 ml *t*-Butanol versetzt. Anschließend wird diese Mischung mit 7 ml 1,1,1,2-Tetrafluorethan und 6 ml eines Propan-Butan-Gemisches (mit einem Propan/Butan-Verhältnis von 2:1) befüllt. Es wird eine klare Lösung erhalten.

### Beispiel 10:

### Herstellung einer schäumbaren Mischung (nicht erfindungsgemäß):

50 g der Prepolymermischung aus Beispiel 2 werden in ein Druckglas mit Ventil gefüllt und mit 1,5 g Schaumstabilisator

B8443® (Fa. Goldschmidt) und 0,5 ml Isopropylphosphat als Katalysator versetzt. Anschließend wird diese Mischung mit 1 ml Dimethylether und 18 ml eines Propan-Butan-Gemisches (mit einem Propan/Butan-Verhältnis von 2:1) beaufschlagt. Von diesen 18 ml Propan/Butan sind ca. 9 ml im Prepolymer löslich. Diese Lösung bildet mit den verbleibenden 9 ml Propan/Butan ein 2-Phasengemisch. Aus diesem Gemisch lassen sich durch Schütteln Emulsionen erhalten, welche sich verschäumen lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, allerdings sind ca. 30-35 Hübe sind für eine gute Emulgierung erforderlich.

### Beispiel 11:

### Herstellung einer schäumbaren Mischung (nicht erfindungsgemäß):

50 g der Prepolymermischung aus Beispiel 2 werden in ein Druckglas Ventil gefüllt und mit 1,5 g Schaumstabilisator B8443® (Fa. Goldschmidt) und 0,5 ml Butylphosphat als Katalysator versetzt. Anschließend wird diese Mischung mit 18 ml eines Propan-Butan-Gemisches (mit einem Propan/Butan-Verhältnis von 2:1) beaufschlagt. Von diesen 18 ml Propan/Butan sind ca. 9 ml im Prepolymer löslich. Diese Lösung bildet mit den verbleibenden 9 ml Propan/Butan ein 2-Phasengemisch. Aus diesem Gemisch lassen sich durch starkes Schütteln Emulsionen erhalten, welche sich verschäumen lassen und über mehrere Tage stabil bleiben. Auch nach einer Entmischung dieser Emulsion läßt sich das 2-Phasengemisch durch erneutes Schütteln reemulgieren. Dabei sind ca. 30-40 kräftige Hübe für eine gute Emulgierung erforderlich.

### Beispiel 12:

### Herstellung einer schäumbaren Mischung (nicht erfindungsgemäß):

50 g der Prepolymermischung aus Beispiel 2 werden in ein Druckglas mit Ventil gefüllt und mit 1,5 g Schaumstabilisator B8443® (Fa. Goldschmidt) und 0,1 ml Benzoylchlorid als

Katalysator versetzt. Anschließend wird diese Mischung mit 2 ml Dimethylether und 18 ml eines Propan-Butan-Gemisches (mit einem Propan/Butan-Verhältnis von 2:1) beaufschlagt. Von diesen 18 ml Propan/Butan sind ca. 9 ml im Prepolymer löslich. Diese Lösung bildet mit den verbleibenden 9 ml Propan/Butan ein 2-Phasengemisch. Aus diesem Gemisch lassen sich durch einfaches Schütteln Emulsionen erhalten, welche sich problemlos verschäumen lassen und über mehrere Tage stabil bleiben. Auch nach einer Entmischung dieser Emulsion läßt sich das 2-Phasengemisch durch erneutes einfaches Schütteln ebenso problemlos reemulgieren. Das Schütteln kann dabei locker ohne unüblichen Kraftaufwand durchgeführt werden, ca. 15-20 Hübe sind für eine hervorragende Emulgierung ausreichend.

### Beispiel 13:

### Herstellung einer schäumbaren Mischung (nicht erfindungsgemäß):

50 g der Prepolymermischung aus Beispiel 2 werden in ein Druckglas mit Ventil gefüllt und mit 1,5 g Schaumstabilisator B8443® (Fa. Goldschmidt) und 0,1 ml Benzoylchlorid als Katalysator versetzt. Anschließend wird diese Mischung mit 9 ml 1,1,1,2-Tetrafluorethan und 9 ml eines Propan-Butan-Gemisches (mit einem Propan/Butan-Verhältnis von 2:1) beaufschlagt. Es wird eine klare Lösung erhalten.

### Beispiel 14

### Herstellung einer schäumbaren Mischung (nicht erfindungsgemäß):

50 g der Prepolymermischung aus Beispiel 4 werden in ein Druckglas mit Ventil gefüllt und mit 1,2 g Schaumstabilisator B8443® (Fa. Goldschmidt) und 0,3 ml Butylphosphat als Katalysator versetzt. Anschließend wird diese Mischung mit 7 ml 1,1,1,2-Tetrafluorethan und 6 ml eines Propan-Butan-Gemisches (mit einem Propan/Butan-Verhältnis von 2:1) befüllt. Es wird eine klare Lösung erhalten.

### Beispiel 15:

### Durchführung von Schäumversuchen

Beim Ausbringen der schäumbaren Mischung aus den Beispielen 5-14 werden ausnahmslos standfeste Schäume erhalten. Dabei wird vor der Verschäumung auf das Ventil des Druckbehälters ein Plastikröhrchen (Länge ca. 20 cm, Durchmesser ca. 6 mm) aufgeschraubt, durch das der Schaum auch in engen Fugen ortsgenau und bequem ausgebracht werden kann. Dieses Verfahren wird auch bei herkömmlichen PU-Schäumen standardmäßig angewendet. Sämtliche Verschäumungen wurden bei Raumtemperatur (ca. 23 °C) durchgeführt.

Die Klebfreizeiten hängen ausschließlich von den in den jeweiligen Beispielen eingesetzten Katalysatoren ab - sie sind in Tabelle 1 angegeben. Unter Klebfreizeit ist dabei diejenige Zeitspanne zu verstehen, die nach dem Ausbringen des Polymers an die Luft vergeht, bis die Polymeroberfläche soweit gehärtet ist, daß nach einer Berührung dieser Oberfläche mit einem Laborspatel weder Polymermasse am Spatel haften bleibt, noch eine Fadenbildung auftritt (bei 23 °C, ca. 50 % rh).

Nach spätestens 6 h waren sämtliche Schäume schnittfest (bei Schaumdicken von ca. 5 cm). Die ausgehärteten Schäume zeichnen sich ausnahmslos durch eine hohe Härte aus und sind nicht spröde. Werden die Schäume nicht in einer Fuge verschäumt, so zeigen alle Schäume eine sehr gute Porenstruktur.

Die Schaumstrukturen bei einer Verschäumung in der Modellfuge nach Fig.1 sind in Tabelle 1 angegeben. Dabei bedeutet die Bewertung "rißfrei", daß Schäume mit einer ausgezeichneten Porenstruktur erhalten wurden, die keinerlei Risse aufweisen. Die Bewertung "Kleine Risse" beschreibt Schäume, die Risse aufweisen, welche insgesamt weniger als 20 % des gesamten Fugenvolumens einnehmen. Mit der Bewertung "große Risse" werden Schäume beschrieben, die Risse aufweisen, welche mehr als 20 % des gesamten Fugenvolumens einnehmen.

Ebenfalls in Tabelle 1 angegeben ist das Schäumverhalten. Als Maß dienen dabei konventionelle PU-Sprayschäume, mit denen sich auch große Volumina in relativ kurzer Zeit ausschäumen lassen.

So ist eine Ausschäumung der Modellfuge nach Fig.1 mit konventionellen PU-Sprayschäumen innerhalb von 3 s problemlos möglich. Daher wird ein Schaum, mit dem sich eine Modellfuge nach Fig.1 ebenfalls in maximal 3 s ausschäumen läßt, in Tabelle 1 diesbezüglich als "gut" bezeichnet. Wird - ob einer höheren Viskosität der schäumbaren Mischung während des Schäumvorganges - für ein vollständiges Verschäumen der Modellfuge nach Fig.1 ein Zeitraum von 5-10 s benötigt, so wird dieses Schäumverhalten in Tabelle 1 mit "mäßig" bezeichnet. Mit der Bewertung "schlecht" werden Schäume bezeichnet, die so zäh sind, daß für eine vollständige Verschäumung der Modellfuge nach Fig. 1 über 10 s benötigt werden.

**Tabelle 1:**

| | Klebfreizeit | Farbe | Schaumstruktur | Schäumverhalten |
|---|---|---|---|---|
| Beispiel 5 erfindungsgemäß | 5-8 min | weiß | Rißfrei | gut |
| Beispiel 6 erfindungsgemäß | 1-2 min | weiß | Rißfrei | gut |
| Beispiel 7 erfindungsgemäß | 8-10 min | weiß | Rißfrei | gut |
| Beispiel 8 erfindungsgemäß | 1-2 min | weiß | Rißfrei | gut |
| Beispiel 9 erfindungsgemäß | 4-6 min | leicht gelblich | Rißfrei | gut |
| Beispiel 10 nicht erfindungsgemäß | 5-8 min | weiß | Rißfrei | mäßig |
| Beispiel 11 nicht erfindungsgemäß | 8-10 min | weiß | Rißfrei | schlecht |
| Beispiel 12 nicht erfindungsgemäß | 1-2 min | weiß | kleine Risse | gut |
| Beispiel 13 nicht erfindungsgemäß | 1-2 min | weiß | große Risse | gut |
| Beispiel 14 nicht erfindungsgemäß | 4-6 min | leicht gelblich | Rißfrei | schlecht |

## Patentansprüche

1. Schäumbare Mischungen (M), enthaltend
(A) isocyanatfreie, alkoxysilanterminierte Prepolymere (A) welche über Silanterminierungen der allgemeinen Formel [2],
-SiR³_{z}(OR⁴)_{3-z} [2]
verfügen, in der
R³ einen Alkyl-, Cycloalkyl-, Alkenyl- oder Arylrest mit 1-10 Kohlenstoffatomen,
R⁴ einen Alkylrest mit 1-2 Kohlenstoffatomen oder einen ω-Oxaalkyl-alkylrest mit insgesamt 2-10 Kohlenstoffatomen und
z die Werte 0 oder 1 bedeuten,
(B) Treibmittel und
(C) Lösungsmittel mit einem Siedepunkt von mindestens 30 °C.

2. Mischungen (M) nach Anspruch (1), bei denen die alkoxysilanterminierte Prepolymere (A) über Silanterminierungen der allgemeinen Formel [3], 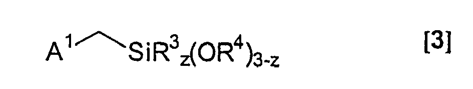 verfügen, wobei
A¹ ein Sauerstoffatom, eine N-R⁵-Gruppe oder ein Schwefelatom,
R⁵ ein Wasserstoffatom, einen Alkyl-, Cycloalkyl-, Alkenyl- oder Arylrest mit 1-10 Kohlenstoffatomen oder eine -CH₂₋SiR³_{z}(OR⁴)_{3-z}-Gruppe bedeuten, und
R³, R⁴ und z die in Anspruch (1) angegebenen Bedeutungen aufweisen.

3. Mischungen nach Anspruch 1 oder 2, welche isocyanatfrei sind.

4. Mischungen (M) nach Anspruch 1 bis 3 ,bei denen das Treibmittel (B) ausgewählt wird aus Kohlenwasserstoffen mit 1-4 Kohlenstoffatomen und Dimethylether.

5. Mischungen nach Anspruch 1 bis 4, bei denen das Lösungsmittel (C) einen Siedepunkt von 40-200 °C aufweist.

6. Mischungen nach Anspruch 1 bis 5, bei denen das Lösungsmittel (C) ausgewählt wird aus Ethern, Estern und Alkoholen.

7. Mischungen nach Anspruch 1 bis 6, bei denen das Lösungsmittel (C) in Konzentrationen von 0,1-20 Vol.-% bezogen auf das Prepolymer (A) zugegeben wird.

8. Mischungen nach Anspruch 1 bis 7, bei denen die Prepolymere (A) einen Polyurethankern aufweisen und erhältlich sind durch Umsetzung von Polyolen (A1) mit Di- oder Polyisocyanaten (A2) und Alkoxysilanen (A4), welche entweder über eine Isocyanatfunktion oder über eine isocyanatreaktive Gruppe verfügen.

9. Mischungen nach Anspruch 8, bei denen die Polyole (A1) ganz oder teilweise aus halogenierten Polyolen (A11) bestehen.

10. Mischungen nach Anspruch 1 bis 9, die als Katalysatoren (E) partiell veresterte Phosphorsäurederivate enthalten.

11. Druckbehälter, enthaltend die schäumbaren Mischungen (M) gemäß Anspruch 1 bis 10.

## Claims

1. Foamable mixtures (M) comprising (A) isocyanate-free, alkoxysilane-terminated prepolymers (A) having silane end groups of the general formula [2]
-SiR³_{z}(OR⁴) _{3-z} [2]
where
R³ is an alkyl, cycloalkyl, alkenyl or aryl radical having 1-10 carbon atoms,
R⁴ is an alkyl radical having 1-2 carbon atoms or an ω-oxaalkylalkyl radical having a total of 2-10 carbon atoms and
z is 0 or 1,
(B) blowing agents, and
(C) solvents having a boiling point of at least 30°C.

2. Mixture (M) according to Claim 1, wherein the alkoxysilane-terminated prepolymers (A) have silane end groups of the general formula [3] 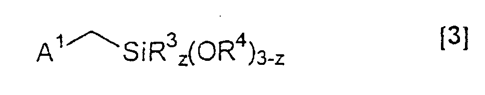 where
A¹ is an oxygen atom, an N-R⁵group or a sulphur atom,
R⁵ is a hydrogen atom, an alkyl, cycloalkyl, alkenyl or aryl radical having 1-10 carbon atoms or a -CH₂-SiR³_{z} (OR⁴))_{3-z} group and
R³, R⁴ and z are as defined in claim 1.

3. Mixture according to Claim 1 or 2, which are isocyanate-free.

4. Mixture (M) according to any of Claims 1 to 3, wherein the blowing agent (B) is selected from among hydrocarbons having 1-4 carbon atoms and dimethyl ether.

5. Mixture according to any of Claims 1 to 4, wherein the solvent (C) has a boiling point of 40-200°C.

6. Mixture according to any of Claims 1 to 5, wherein the solvent (C) is selected from among ethers, esters and alcohols.

7. Mixture according to any of Claims 1 to 6, wherein the solvent (C) is added in concentrations of 0.1-20% by volume, based on the prepolymer (A).

8. Mixture according to any of Claims 1 to 7, wherein the prepolymers (A) have a polyurethane nucleus and are obtainable by reacting polyols (A1) with diisocyanates or polyisocyanates (A2) and alkoxysilanes (A4) which have either an isocyanate function or an isocyanate-reactive group.

9. Mixture according to Claim 8, wherein the polyols (A1) consist entirely or partly of halogenated polyols (A11).

10. Mixture according to any of Claims 1 to 9 which comprises partially esterified phosphoric acid derivatives as catalysts (E).

11. Pressure vessels containing the foamable mixtures (M) according to any of Claims 1 to 10.

## Revendications

1. Mélanges moussants (M), comprenant
(A) des prépolymères (A) à terminaison alcoxysilane et dépourvus d'isocyanate, qui disposent des terminaisons silane de formule générale [2],
-SiR³_{z} (OR⁴) _{3-z} [2]
dans laquelle
R³ représente un radical alkyle, un radical cycloalkyle, un radical alcényle ou un radical aryle renfermant de 1 à 10 atomes de carbone,
R⁴ représente un radical akyle renfermant 1-2 atomes de carbone ou un radical ω-oxa-alkylalkyle renfermant au total de 2 à 10 atomes de carbone, et
z vaut 0 ou 1,
(B) un agent gonflant, et
(C) un solvant présentant un point d'ébullition d'au moins 30°C.

2. Mélanges (M) selon la revendication (1), dans lesquels les prépolymères (A) à terminaison alcoxysilane disposent de terminaisons silane de formule générale [3], 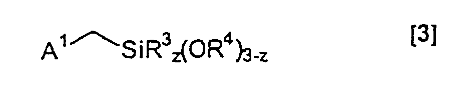 dans laquelle
A¹ représente un atome d'oxygène, un groupe N-R⁵ ou un atome de soufre,
R⁵ représente un atome d'hydrogène, un radical alkyle, un radical cycloalkyle, un radical alcényle ou un radical aryle renfermant de 1 à 10 atomes de carbone, ou un groupe -CH₂-SiR³_{z} (OR⁴)_{3-z}, et
R³, R⁴ et z présentent les significations indiquées dans la revendication (1).

3. Mélanges selon la revendication 1 ou 2, qui sont dépourvus d'isocyanate.

4. Mélanges (M) selon les revendications 1 à 3, dans lesquels l'agent gonflant (B) est choisi parmi des hydrocarbures renfermant de 1 à 4 atomes de carbone et l'éther diméthylique.

5. Mélanges selon les revendications 1 à 4, dans lesquels le solvant (C) présente un point d'ébullition de 40 à 200°C.

6. Mélanges selon les revendications 1 à 5, dans lesquels le solvant (C) est choisi parmi des éthers, des esters et des alcools.

7. Mélanges selon les revendications 1 à 6, dans lesquels le solvant (C) est ajouté en concentrations de 0,1 à 20 % en volume, par rapport au prépolymère (A).

8. Mélanges selon les revendications 1 à 7, dans lesquels les prépolymère (A) renferment un noyau polyuréthane et peuvent être obtenus par réaction de polyols (A1) avec des diisocyanates ou des polyisocyanates (A2) et des alcoxysilanes (A4), qui disposent soit d'une fonction isocyanate, soit d'un groupe réactif vis-à-vis d'un isocyanate.

9. Mélanges selon la revendication 8, dans lesquels les polyols (A1) sont entièrement ou partiellement constitués de polyols halogénés (A11).

10. Mélanges selon les revendications 1 à 9, comprenant des dérivés de l'acide phosphorique partiellement estérifiés en tant que catalyseurs (E).

11. Récipient sous pression, comprenant les mélanges moussants (M) selon les revendications 1 à 10.
